# FASCICULE DE BREVET EUROPEEN

(11) **EP 2 535 847 B1**
(45) Date de publication et mention de la délivrance du brevet: **02.08.2017**
(21) Numéro de dépôt: 12171638.5
(22) Date de dépôt: 12.06.2012
(51) Int. Cl.: G06K 19/07

(54) **Circuit intégré sans contact présentant des modes de fonctionnement NFC et UHF**
Kontaktloser integrierter schaltkreis mit nfc- und uhf-betriebsmodus
Contactless integrated circuit with NFC and UHF operating modes

(30) Priorité: 17.06.2011 FR 1155300
(43) Date de publication de la demande: 19.12.2012
(60) Demande divisionnaire: 17176054.9
(73) Titulaire: Inside Secure, 13590 Meyreuil (FR)
(72) Inventeur: Charrat, Bruno, 13090 Aix en Provence (FR); Cordier, Nicolas, 13080 Luynes (FR)
(74) Mandataire: de Roquemaurel, Bruno

(56) Documents cités:
- EP-A2- 2 012 257
- WO-A1-2009/135722
- WO-A2-2004/034317

## Description

La présente invention concerne les circuits intégrés sans contact RFID ("Radio Frequency Identification") pouvant communiquer par couplage inductif ou par couplage de champ électrique avec d'autres dispositifs.

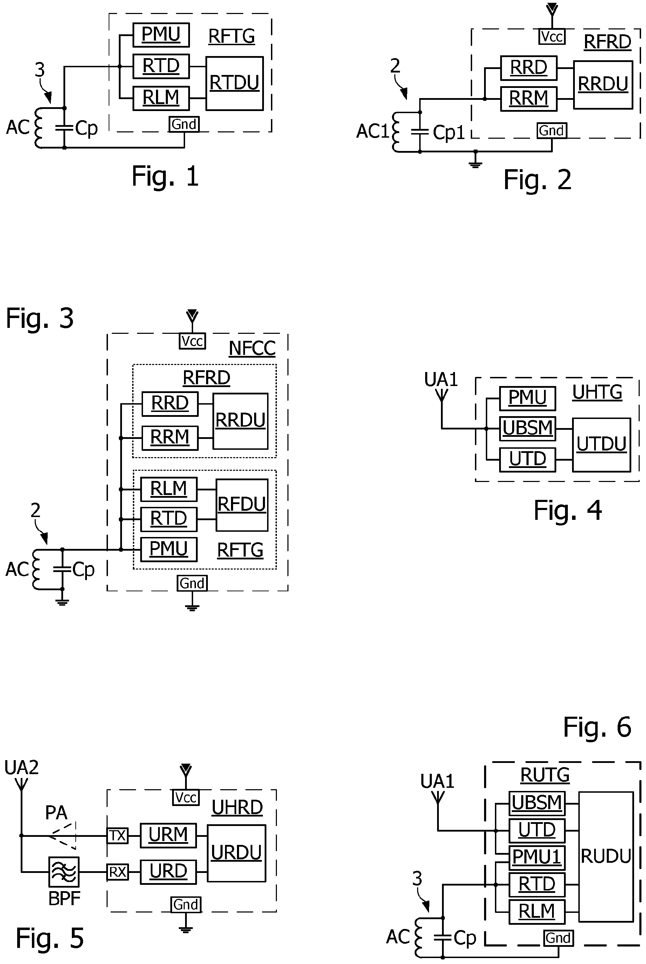

Les circuits intégrés RFID fonctionnant par couplage inductif, peuvent être de type étiquette ou lecteur d'étiquette. La figure 1 représente schématiquement un circuit intégré d'étiquette RFTG fonctionnant par couplage inductif. Le circuit intégré RFTG est connecté à un circuit d'antenne 3 et comprend un circuit de modulation RLM, un circuit de démodulation RTD, un circuit d'alimentation électrique PMU et un circuit de traitement RTDU connecté aux circuits RTD et RLM. Le circuit d'antenne 3 est accordé à une fréquence de résonnance de l'ordre de 13,56 MHz, et comprend une ou plusieurs bobines AC et un condensateur d'accord Cp connecté en parallèle à la bobine AC. Le circuit d'antenne est connecté entre une entrée des circuits RLM, RTD et PMU et la masse Gnd du circuit RFTG. Le circuit d'alimentation électrique PMU comprend généralement un circuit redresseur à diode pour fournir une tension d'alimentation à partir d'une tension apparaissant aux bornes du circuit d'antenne lorsque le circuit intégré est soumis à un champ magnétique alternatif émis par un lecteur d'étiquette RFID. Le circuit de modulation RLM génère une sous-porteuse de modulation de charge qui est combinée à des données à émettre fournies par le circuit de traitement RTDU. Le circuit de démodulation RTD extrait d'un signal reçu par le circuit d'antenne 3, des données transmises par un lecteur RFID, généralement par modulation d'amplitude du champ magnétique émis. Le circuit RTD transmet les données démodulées au circuit de traitement RTDU. Le circuit de traitement RTDU comprend généralement une unité de traitement connectée à des mémoires volatile et non volatile. Le circuit d'étiquette RFTG peut être utilisé par exemple dans une carte de paiement ou de contrôle d'accès, ou encore dans un document d'identification tel qu'un passeport ou une carte d'identité.

La figure 2 représente schématiquement un circuit intégré de lecteur RFRD fonctionnant par couplage inductif. Le circuit intégré RFRD comprend deux bornes RX, TX reliées à un circuit d'antenne 2, une borne de masse Gnd, une borne d'alimentation électrique Vcc, un circuit de traitement RRDU, un circuit de modulation RRM connecté entre la borne TX et le circuit RRDU, et un circuit de démodulation RRD connecté entre la borne RX et le circuit RRDU. Le circuit d'antenne 2 comprend une première borne connectée à une borne de masse Gnd du circuit RFRD, et une seconde borne connectée aux bornes RX et TX. Le circuit d'antenne 2 est également accordé à la fréquence de résonnance de l'ordre de 13,56 MHz, et comprend une ou plusieurs bobines AC1 et un condensateur d'accord Cp1 connecté en parallèle à la bobine AC1. Le circuit de traitement RRDU comprend généralement une unité de traitement connectée à des mémoires volatile et non volatile et peut être connecté à d'autres circuits. Le circuit de lecteur RFRD peut être utilisé par exemple dans un lecteur de contrôle d'accès ou un terminal de paiement.

Récemment, il a également été développé la technologie de communication à champ proche NFC ("Near Field Communication") permettant à un même circuit intégré de fonctionner dans un mode lecteur ou dans un mode émulation de carte dans lequel le circuit intégré émule une étiquette RFID pouvant communiquer avec un lecteur RFID ou un autre circuit NFC. A cet effet, un tel circuit intégré regroupe les circuits RFTG et RFRD des figures 1 et 2, connecté au circuit d'antenne 2. Ainsi, la figure 3 représente schématiquement un composant NFC, référencé NFCC, comprenant les circuits RFTG et RFRD. Le composant NFCC comprend également une borne d'alimentation électrique Vcc et une borne de masse Gnd. Le circuit d'antenne 2 est connecté aux circuits RRD, RRM, RTD, RLM et PMU. Les fonctions assurées par les circuits de traitement RTDU et RRDU du circuit NFCC peuvent être assurées par un seul circuit de traitement.

L'échange de données par la technologie RFID ou NFC s'effectue par couplage inductif entre la bobine d'antenne d'un lecteur et la bobine d'antenne d'une étiquette, par l'intermédiaire d'un champ magnétique alternatif à la fréquence normalisée de 13,56 MHz, émis par le lecteur. Les circuits de type lecteur requièrent des bobines d'antenne de grande taille, de l'ordre de 12 cm² pour une distance de lecture de l'ordre de 2 cm, ce qui représente une contrainte importante si le circuit doit être intégré dans un autre système tel qu'un téléphone mobile.

Il existe par ailleurs d'autres technologies d'étiquettes sans contact, telle que la technologie UHF, basée sur un couplage électrique entre deux antennes. Cette technologie permet d'atteindre des distances de lecture de plusieurs mètres. Les bandes de fréquences employées (860 à 960 MHz) par la technologie d'étiquettes UHF permettent d'utiliser des antennes de plus petite taille que les bobines d'antenne NFC. Les étiquettes UHF émettent généralement des données de manière passive en utilisant une technique de rétromodulation appelée "backscattering" qui consiste en une modulation du coefficient de réflexion de l'antenne de l'étiquette UHF. Les étiquettes UHF peuvent également être alimentées par le champ électrique émis par un lecteur UHF. La technologie UHF est utilisée principalement dans le domaine de la traçabilité en production et logistique, et également pour la surveillance d'articles en vente dans les magasins.

La figure 4 représente schématiquement un circuit intégré d'étiquette UHF, référencé UHTG. Le circuit UHTG comprend un circuit de modulation UBSM, un circuit de démodulation UTD et un circuit d'alimentation électrique PMU connectés à une antenne UA1. Les circuits UBSM et UTD sont connectés à un circuit de traitement UTDU.

La figure 5 représente schématiquement un circuit de lecteur UHF, référencé UHRD. Le circuit UHRD comprend un circuit de modulation URM et un circuit de démodulation URD. Le circuit URM est relié par une borne TX à une antenne UA2, éventuellement par l'intermédiaire d'un circuit d'amplification PA. Le circuit URD est relié par une borne RX à l'antenne par l'intermédiaire d'un filtre passe bande BPF. Le circuit UHRD est alimenté entre des bornes Vcc et Gnd.

Dans la demande de brevet WO 2004/034317 (ou US2005/0186904), il a été proposé de combiner dans un même circuit d'étiquette des circuits fonctionnant par couplage inductif et par couplage électrique. La figure 6 représente schématiquement un circuit d'étiquette référencé RUTG. Le circuit d'étiquette RUTG est connecté à une antenne UHF UA1 et à un circuit d'antenne HF 3. Le circuit RUTG comprend des circuits de modulation et de démodulation HF RLM, RTD connectés au circuit d'antenne 3, des circuits de modulation et de démodulation UHF UBSM, UTD connectés à l'antenne UA1, et un circuit de traitement RUDU connecté aux circuits de modulation RLM, UBSM et de démodulation RTD, UTD. Le circuit RUTG comprend également un circuit d'alimentation électrique PMU1 connecté à l'antenne UA1 et au circuit d'antenne 3.

Il est souhaitable de proposer des dispositifs combinant les technologies NFC et UHF, notamment afin de permettre de nouvelles applications grâce à la plus longue portée offerte par la technologie UHF. Cependant, l'intégration dans un même composant de circuits de modulation et de démodulation HF et UHF conduit à un composant ayant un encombrement relativement important. Il est donc également souhaitable de diminuer l'encombrement d'un tel composant.

Des modes de réalisation concernent un circuit intégré sans contact comprenant : des circuits de modulation et de démodulation configurés pour se connecter à un circuit d'antenne HF pour émettre et recevoir des signaux HF par couplage inductif dans un mode lecteur, des circuits de modulation et de démodulation configurés pour se connecter à une antenne UHF pour émettre et recevoir des signaux UHF par couplage électrique dans un mode lecteur, un circuit de traitement de donnée connecté aux circuits de modulation et de démodulation, et configuré pour fournir des données à émettre aux circuits de modulation, et pour traiter des signaux reçus, transmis par les circuits de démodulation. Selon un mode de réalisation, les circuits de démodulation comprennent un circuit de démodulation commun pour traiter des signaux reçus indifféremment par l'antenne UHF et par le circuit d'antenne HF.

Selon un mode de réalisation, le circuit intégré comprend un circuit de modulation configuré pour se connecter à un circuit d'antenne HF pour émettre des signaux HF par couplage inductif dans un mode étiquette, et un circuit de modulation configuré pour se connecter à l'antenne UHF pour émettre des signaux UHF par couplage électrique dans un mode étiquette, le circuit de démodulation commun étant configuré pour traiter des signaux reçus indifféremment dans les modes lecteur et étiquette.

Selon un mode de réalisation, le circuit de démodulation commun comprend un circuit convertisseur de fréquence pour convertir des signaux UHF reçus par l'antenne UHF en signaux modulés à une fréquence de porteuse HF, les signaux UHF convertis et les signaux reçus par le circuit d'antenne HF étant démodulés par un même circuit de démodulation.

Selon un mode de réalisation, le circuit convertisseur de fréquence comprend un oscillateur local configuré pour générer un signal d'oscillateur à une fréquence présentant un écart avec une fréquence de porteuse UHF utilisée pour moduler les signaux UHF, égal à la fréquence de porteuse HF, et un circuit mélangeur de fréquence pour mélanger les signaux UHF reçus avec le signal d'oscillateur.

Selon un mode de réalisation, le circuit de démodulation commun comprend un premier circuit de détection d'enveloppe connecté à l'antenne UHF et un second circuit de détection d'enveloppe connecté au circuit d'antenne HF, les premier et second circuits de détection d'enveloppe étant connectés à un même circuit de décodage de signaux.

Selon un mode de réalisation, les circuits de détection d'enveloppe effectuent une détection de phase.

Selon un mode de réalisation, le circuit de démodulation commun comprend un premier circuit de détection d'enveloppe connecté à l'antenne UHF et fournissant un signal d'enveloppe à partir d'un signal UHF reçu, et un circuit de modulation pour moduler un signal de porteuse HF à une fréquence HF avec le signal d'enveloppe, le signal d'enveloppe modulé étant fourni à un circuit de démodulation de signaux HF.

Selon un mode de réalisation, la porteuse HF est générée par un circuit de modulation HF prévu pour moduler un signal de donnée à émettre par le circuit d'antenne HF.

Selon un mode de réalisation, le circuit intégré comprend un circuit d'alimentation configuré pour redresser chacun des signaux HF et UHF reçus et générer à partir des signaux redressés une tension d'alimentation du circuit intégré en l'absence d'alimentation électrique externe.

Selon un mode de réalisation, le circuit intégré est configuré pour émettre et recevoir des signaux, en modes étiquette et lecteur, conformes à au moins l'une des normes ISO14443 type A ou B, ISO15693, et ISO180006 type A, B ou C.

Selon un mode de réalisation, le circuit intégré comprend une borne d'entrée d'un signal d'inhibition indiquant s'il peut ou non engager une communication en mode lecteur UHF.

Selon un mode de réalisation, le circuit intégré comprend une borne d'entrée d'un signal d'horloge externe utilisé pour générer des signaux de porteuse HF et UHF.

Selon un mode de réalisation, le circuit intégré comprend une borne de sortie de signaux de données à émettre en mode lecteur UHF sous la forme d'un signal radio UHF modulé.

Des modes de réalisation concernent également un dispositif comprenant : un émetteur-récepteur GSM équipé d'une antenne UHF, un générateur d'horloge couplé à l'émetteur-récepteur GSM, un processeur configuré pour se connecter au réseau GSM au moyen de l'émetteur-récepteur GSM. Selon un mode de réalisation, le dispositif comprend un circuit intégré tel que défini précédemment, le circuit intégré étant connecté à un circuit d'antenne HF.

Selon un mode de réalisation, le circuit intégré comprend une borne de réception de signaux UHF connectée à l'antenne de l'émetteur-récepteur GSM, et une borne d'entrée d'un signal d'inhibition indiquant s'il peut ou non engager une communication en mode lecteur UHF, la borne d'entrée recevant du processeur un signal d'activité indiquant si l'émetteur-récepteur GSM est en activité pour une connexion au réseau GMS ou non.

Selon un mode de réalisation, le circuit intégré comprend une borne de sortie de signaux de données à émettre en mode lecteur UHF, la borne de sortie de signaux de données étant connectée au processeur pour émettre un signal radio UHF modulé par l'émetteur-récepteur GSM.

Selon un mode de réalisation, le circuit intégré comprend une borne de réception de signaux UHF connectée à l'antenne de l'émetteur-récepteur GSM, la borne de réception étant configurée pour passer de basse impédance à haute impédance lorsqu'un signal d'activité indique que l'émetteur-récepteur GSM est en activité pour une connexion au réseau GSM.

Selon un mode de réalisation, le circuit intégré comprend une borne d'entrée d'un signal d'horloge externe utilisé pour générer des signaux de porteuse HF et UHF, la borne d'entrée de signal d'horloge étant connectée au générateur d'horloge.

Selon un mode de réalisation, le circuit intégré comprend une borne de réception de signaux UHF connectée à une antenne UHF distincte de l'antenne UHF de l'émetteur-récepteur GSM.

Des exemples de réalisation de l'invention seront décrits dans ce qui suit, à titre non limitatif en relation avec les figures jointes parmi lesquelles :
la figure 1 représente schématiquement un circuit intégré d'étiquette HF,
la figure 2 précédemment décrite, représente schématiquement un circuit intégré de lecteur HF,
la figure 3 précédemment décrite, représente schématiquement un composant NFC,
la figure 4 précédemment décrite, représente schématiquement une étiquette UHF,
la figure 5 précédemment décrite, représente schématiquement un lecteur UHF,
la figure 6 représente schématiquement un circuit d'étiquette HF/UHF,
la figure 7 représente schématiquement un composant NFC/UHF selon un mode de réalisation,
la figure 8 représente schématiquement un circuit de démodulation du composant NFC/UHF, selon un mode de réalisation,
la figure 9 représente un spectre fréquentiel de puissance,
la figure 10 représente schématiquement le circuit de démodulation du composant NFC/UHF, selon un autre mode de réalisation,
les figures 11A, 11B, 11C représentent des chronogrammes de signaux du circuit de démodulation,
les figures 12 à 16 représentent schématiquement le circuit de démodulation du composant NFC/UHF, selon divers modes de réalisation,
les figures 17 à 19 représentent schématiquement un téléphone mobile dans lequel le composant NFC/UHF est intégré, selon divers modes de réalisation,
la figure 20 représente schématiquement un composant NFC/UHF selon un autre mode de réalisation.

Des modes de réalisation de l'invention se fondent sur la comparaison des couches physiques HF et UHF telles que décrites dans les normes ISO14443, types A et B et ISO15693, pour la couche physique HF, et IS018000-6 types A, B et C (EPC Gen2) pour la couche physique UHF. Les différents paramètres des couches physiques HF et UHF sont résumés dans le tableau suivant :

**Tableau 1**

| | HF (ISO14443 A/B) | HF (ISO15693) | UHF (ISO18000-6 A/B/C) |
|---|---|---|---|
| Fréquence porteuse | 13,56 MHz | 13,56 MHz | 860-960 MHz |
| Modulation lecteur | A : 100%ASK | 10%ASK ou | A : 27% à 100%ASK |
| | B: 10%ASK | 100%ASK | B : 30,5% ou 100%ASK |
| | | | C : 80 à 100%ASK |
| Débit lecteur | 106 à 847 kbits/s | 26,48 kbits/s | A : 33 kbits/s |
| | | | B : 10 ou 40 kbits/s |
| | | | C : 26,7 à 128 kbits/s |
| Codage bit lecteur | A : Miller modifié B: NRZ | 1 parmi 4 | A : PIE |
| | | | B : Manchester |
| | | | C : PIE |
| Modulation étiquette | Modulation de charge | Modulation de charge | Rétromodulation |
| Débit étiquette | 106 à 847 kbits/s | 28,48kbits/s | 40 à 640 kbits/s |

| | | | |
|---|---|---|---|
| (ASK : "Amplitude Shift Keying") (NRZ : Non Retour à Zéro) (BPSK : "Binary Phase Shift Keying") (OOK : "On-Off Keying") (PIE : "Pulse Interval Encoding") | | | |

Les modulations réalisées par les étiquettes sont vues par un lecteur comme une modulation d'amplitude à faible index.

Dans le tableau 1, il peut être observé qu'en modes HF et UHF, les modulations en mode lecteur sont identiques au taux de modulation près, et les débits présentent un même ordre de grandeur. Par ailleurs, les modulations en mode étiquette sont proches. Il peut donc être envisagé un démodulateur commun pour les modes de transmission HF et UHF, pour chacun des modes de fonctionnement lecteur et étiquette.

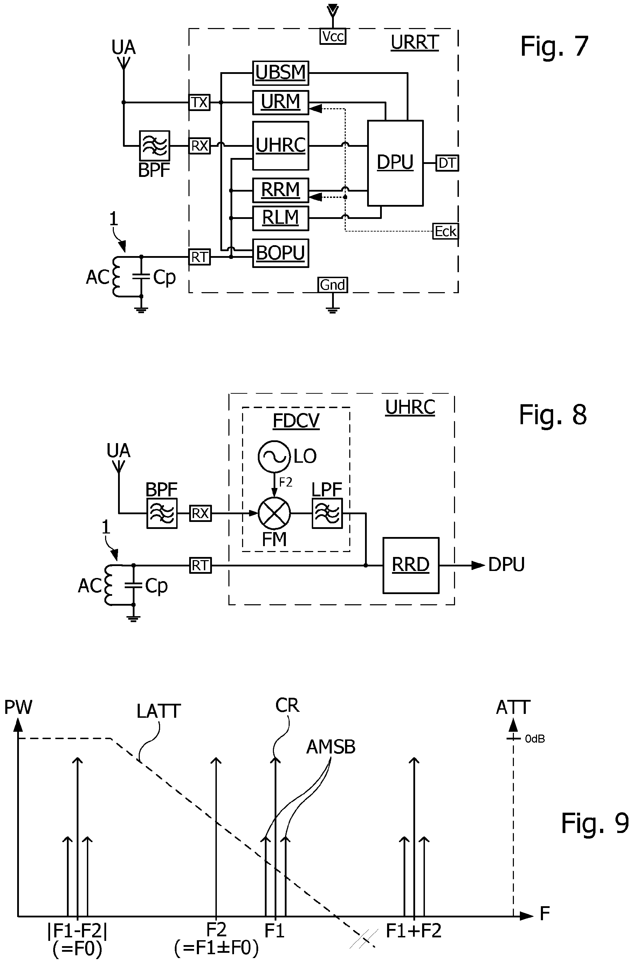

La figure 7 représente un composant NFC / UHF selon un mode de réalisation. Sur la figure 7, le composant NFC / UHF référencé URRT comprend des circuits de modulation et de démodulation pour les modes lecteur et étiquette et les modes de transmission HT et UHF. Le composant URRT peut être alimenté par une source externe entre une borne Vcc et une borne de masse Gnd. Les circuits de modulation du composant URRT comprennent un circuit de modulation URM pour le mode lecteur UHF, et un circuit de modulation de type rétromodulation ("backscattering") UBSM pour le mode étiquette UHF, ces circuits étant reliés par une borne TX à une antenne UHF référencée UA, ainsi qu'un circuit de modulation RRM pour le mode lecteur HF, et un circuit de modulation de charge RLM pour le mode étiquette HF, ces circuits étant reliés par une borne RT à un circuit d'antenne HF référencé 1. Chacun des circuits de modulation et de démodulation du composant URRT est connecté à un circuit de traitement DPU qui peut comprendre une unique unité de traitement, ou bien une unité de traitement pour les modes étiquette HF et UHF et une unité de traitement pour les modes lecteur HF et UHF, ou encore une unité de traitement distincte pour chacun des modes lecteur HF et UHF, et étiquette HF et UHF.

Le circuit DPU est configuré pour assurer le codage des signaux à envoyer en fonction du mode de fonctionnement, lecteur ou étiquette, du composant, et d'un protocole de transmission de données HF ou UHF. Le circuit DPU est également configuré pour assurer le décodage des signaux reçus en fonction de la forme des signaux reçus. A cet effet, le circuit DPU est configuré pour déterminer le mode, lecteur ou étiquette, dans lequel fonctionne le composant URRT, ainsi que le protocole de transmission dans lequel les signaux sont transmis. Le circuit DPU peut ainsi comprendre plusieurs voies de réception en parallèle, chaque voie de réception mettant en oeuvre un protocole de transmission respectif. Ainsi, seule la voie de réception correspondant au protocole de transmission de signaux reçus fournit des données. Le circuit DPU peut être connecté à une borne d'échange de données DT du composant URRT pour recevoir des données à émettre d'un circuit externe ou transmettre des données reçues par le composant URRT à ce circuit externe.

Le composant URRT comprend également un circuit d'alimentation BOPU, configuré pour fournir une tension d'alimentation au composant URRT à partir des signaux reçus par les antennes UA, AC, lorsque le composant n'est pas alimenté, c'est-à-dire lorsqu'il fonctionne en mode étiquette, HF ou UHF. Le circuit BOPU produit d'une manière classique une tension redressée à partir d'un signal alternatif provenant de l'une ou l'autre des deux antennes UA, AC. A cet effet, le circuit BOPU comprend par exemple une diode ou un redresseur à diode, et condensateur de lissage (non représentés) connectés à chacune des bornes RT et TX.

Selon l'invention, le composant URRT comprend un unique circuit de démodulation UHRC adapté à chacun des modes lecteur et étiquette, HF et UHF, le circuit UHRC étant connecté à la borne RT et à l'antenne UA par l'intermédiaire d'une borne RX et d'un filtre passe-bande BPF.

Le composant URRT comprend des circuits d'horloge pour générer les différents signaux de porteuse et d'horloge nécessaires à la génération des signaux à émettre et à la démodulation des signaux reçus. Ainsi, le composant URRT peut comprendre un oscillateur, par exemple du type oscillateur en anneau, pour générer un signal d'horloge de l'unité DPU. En mode étiquette HF, le signal de porteuse est extrait du signal reçu et utilisé comme signal d'horloge. En mode étiquette UHF, le circuit RTG peut générer un signal d'horloge à partir du signal d'horloge de l'unité DPU. Pour générer les signaux de porteuse HF à la fréquence F0 (=13,56 MHz), et UHF à la fréquence F1, le composant URRT peut comprendre un oscillateur à quartz ou bien un circuit à verrouillage de phase recevant un signal d'horloge externe par une borne de connexion externe Eck du composant URRT. Ce signal d'horloge externe peut provenir par exemple de circuits de communication (GSM, Bluetooth, WiFi, ...) d'un dispositif tel qu'un téléphone mobile dans lequel le composant URRT est implanté.

La figure 8 représente le circuit de démodulation UHRC, selon un mode de réalisation. Le circuit UHRC comprend un circuit de démodulation HF RRD connecté à l'antenne AC et un circuit de conversion de fréquence FDCV connecté en entrée à l'antenne UA et en sortie à l'entrée du circuit RRD. Le circuit FDCV est configuré pour abaisser la fréquence de la porteuse des signaux UHF reçus par l'antenne UA, à la fréquence des signaux HF reçus par le circuit d'antenne 1. Le circuit RRD comprend une entrée unique pour recevoir des signaux HF qui proviennent indifféremment du circuit d'antenne 1 et du circuit FDCV, et est configuré pour démoduler ces signaux indépendamment de leur origine. Le circuit FDCV comprend un circuit mélangeur de fréquence FM comprenant une entrée connectée à l'antenne UA, une entrée connectée à la sortie d'un oscillateur local LO, et une sortie reliée à l'entrée du circuit RRD par l'intermédiaire d'un filtre passe-bas LPF. L'oscillateur LO comprend par exemple un circuit oscillant contrôlé par une boucle à verrouillage de phase PLL. Le circuit RRD peut être configuré pour assurer une démodulation d'amplitude ou une démodulation en amplitude et en phase (I, Q).

La figure 9 illustre le fonctionnement du circuit FDCV sous la forme d'un spectre fréquentiel de puissance PW ou d'atténuation ATT, en fonction de la fréquence. L'oscillateur LO produit un signal à la fréquence F2 sensiblement égale à la fréquence F1 de la porteuse des signaux UHF (par exemple 900 MHz) diminuée ou augmentée de la fréquence F0 de la porteuse des signaux HF (à 13,56 MHz). La figure 9 représente la porteuse CR du signal UHF à la fréquence F1 d'un signal UHF et ses deux sous-porteuses AMSB modulées en amplitude. Un signal UHF reçu par l'antenne UA est ainsi mélangé par le circuit FM avec le signal d'oscillateur à la fréquence F2 (= F1-F0 ou F1+F0), produit par l'oscillateur LO. Le signal généré par le circuit FM comprend un signal centré sur une porteuse à la fréquence F1+F2 et un signal centré sur une porteuse à la fréquence |F1-F2| = F0. La figure 9 montre également la courbe d'atténuation LATT du filtre LPF. Le filtre LPF est configuré pour présenter une fréquence de coupure située entre les fréquences F0 et F2, et ainsi pour rejeter les signaux notamment aux fréquences F2, F1 et F1+F2, et ne conserver que le signal centré sur la fréquence F0. Ainsi, le signal en sortie du circuit FDCV présente des caractéristiques analogues à un signal HF reçu par le circuit d'antenne 1 et peut donc être démodulé par le circuit de démodulation RRD prévu pour démoduler les signaux HF reçus par le circuit d'antenne 1, en mode lecteur. En effet, les signaux HF à démoduler, susceptibles d'être reçus, sont des signaux provenant d'un circuit d'émission d'étiquette tel que l'un des circuits RLM et UBSM. La modulation de charge réalisée par le module RLM et la rétromodulation réalisée par le module UBSM sont toutes deux vues par un lecteur comme une modulation d'amplitude de faible index. Par ailleurs, d'après le tableau 1, le codage de bit en mode UHF présente un débit inférieur à celui du mode HF. Le traitement numérique notamment de décodage de signaux démodulés issus d'étiquettes HF peut donc assurer le traitement de signaux issus d'étiquettes UHF. Il en résulte que le traitement des signaux, en sortie du circuit RRD, qu'ils proviennent d'une étiquette NFC ou UHF peut être également commun.

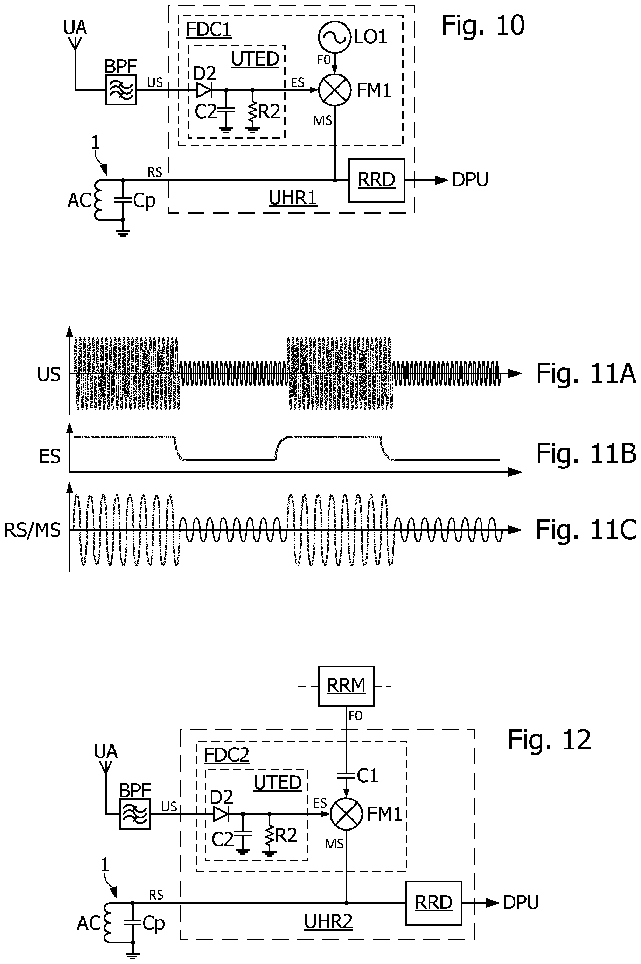

La figure 10 représente un autre mode de réalisation du circuit de démodulation, référencé UHR1, du composant URRT. Le circuit de démodulation UHR1 diffère du circuit UHRC en ce que le circuit FDCV est remplacé par un autre circuit de conversion FDC1 comprenant un circuit de détection d'enveloppe UTED associé à un oscillateur local LO1 et un circuit mélangeur de fréquence FM1. Le circuit UTED comprend une diode d'entrée D2 dont l'anode est connectée à l'antenne UA et dont la cathode est connectée à la sortie du circuit UTED, et reliée à la masse par l'intermédiaire d'un condensateur C2 et d'une résistance R2. La sortie du circuit UTED est connectée au circuit FM1 recevant sur une autre entrée un signal à la fréquence F0 produit par l'oscillateur LO1.

Les figures 11A, 11B, 11C représentent des chronogrammes de signaux, illustrant le fonctionnement du circuit UHR1. Les figures 11A et 11C représentent des signaux UHF référencés US, et HF référencés RS. La figure 11B représente un signal d'enveloppe ES extrait du signal US par le circuit UTED. Les signaux US et RS correspondent aux signaux reçus par les antennes UA, AC, c'est-à-dire à des signaux de porteuse UHF et HF modulés en amplitude par le signal ES. Une même modulation est utilisée en émission dans les modes HF et UHF (ASK), le débit en mode UHF étant inférieur, mais du même ordre de grandeur que celui du mode HF. Ainsi, le signal MS fourni par le circuit FM1 et correspondant à l'enveloppe de signal ES fournie par le circuit UTED et modulée par le signal de porteuse HF à la fréquence F0, peut être traité par le circuit de démodulation HF RRD.

La figure 12 représente un autre mode de réalisation du circuit de démodulation, référencé UHR2. Le circuit UHR2 se distingue du circuit UHR1 en ce que le circuit FDC1 est remplacé par un autre circuit de conversion FDC2. Le circuit FDC2 diffère du circuit FDC1 en ce que l'oscillateur local LO1 est supprimé et remplacé par une liaison comportant un condensateur C1 de liaison, reliant une entrée du circuit FM1 à une sortie de signal de porteuse à la fréquence F0 du circuit de modulation RRM. Ce signal de porteuse est utilisé par le circuit RRM pour moduler des signaux à émettre en mode lecteur HF.

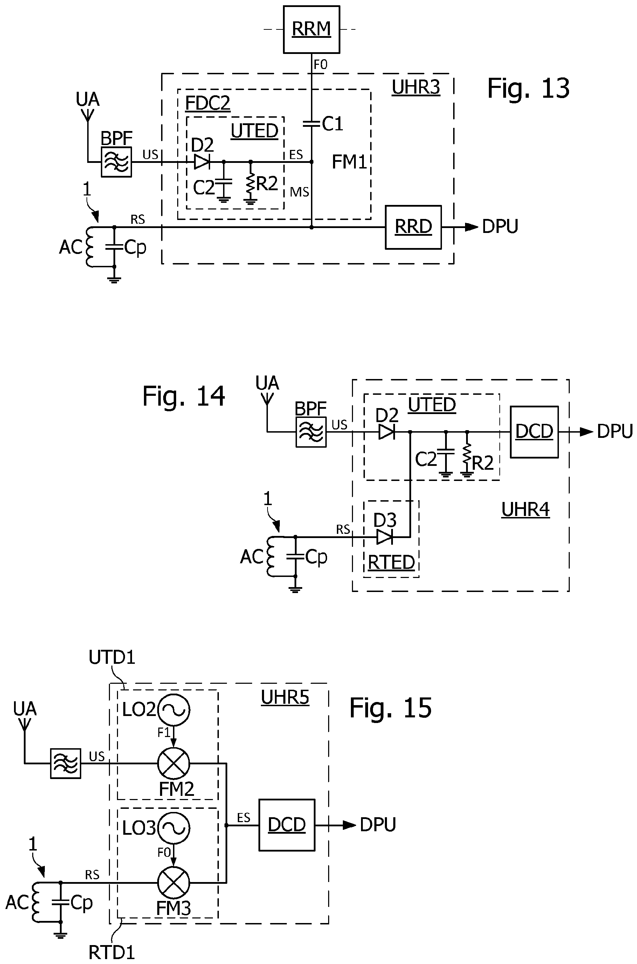

La figure 13 représente un autre mode de réalisation du circuit de démodulation, référencé UHR3. Le circuit UHR3 se distingue du circuit UHR2 en ce que le circuit mélangeur de fréquence FM1 est supprimé et remplacé par un simple point de connexion, éventuellement avec un ou plusieurs interrupteurs, notamment pour éviter d'introduire le signal de porteuse HF dans un signal reçu en mode HF.

La figure 14 représente un autre mode de réalisation du circuit de démodulation, référencé UHR4. Le circuit UHR4 se distingue du circuit UHR2 en ce que les circuits FM1 et RRD sont supprimés et remplacés par un autre circuit de détection d'enveloppe RTED et un circuit de décodage de signaux DCD. Le circuit RTED est connecté en entrée au circuit d'antenne 1, et les circuits UTED et RTED sont connectés en sortie au circuit décodage DCD qui est commun aux deux modulations HF et UHF. Le circuit RTED comprend une diode d'entrée D3 dont l'anode est connectée à l'antenne AC et dont la cathode est connectée à la sortie du circuit RTED, et reliée à la masse par l'intermédiaire d'un condensateur et d'une résistance qui peuvent être le condensateur C2 et la résistance R2 du circuit UTED. En effet, les diodes D2 et D3 présentent des caractéristiques différentes pour être capable de redresser des signaux de fréquence 13,56 MHz pour l'une et 900 MHz pour l'autre. En revanche, le circuit de filtrage comportant le condensateur C2 et la résistance R2 peut être commun car les données sont transmises avec un débit du même ordre de grandeur. Le circuit DCD comprend une entrée unique recevant indifféremment des signaux d'enveloppe fournis par l'un ou l'autre des circuits RTED, UTED, et issus des antennes UA, AC, et est configuré pour décoder ces signaux d'enveloppe indépendamment de leur origine.

Le fonctionnement des circuits UHED et RFED peut également être illustré par les figures 11A, 11B, 11C. Les figures 11A et 11C représentent des signaux UHF référencés US et HF référencés RS. La figure 11B représente un signal d'enveloppe ES extrait de l'un ou l'autre des signaux US et RS par l'un des circuits UTED, RTED. Les signaux US et RS correspondent aux signaux reçus par les antennes UA, AC, c'est-à-dire des signaux de porteuse UHF et HF modulés en amplitude par le signal ES. Les modulations HF et UHF sont analogues (ASK) et les débits offerts par ces deux modulations sont du même ordre de grandeur. Ainsi, l'enveloppe de signal fournie par le circuit UTED peut être traitée par un circuit de décodage (DCD) adapté au traitement de l'enveloppe de signal fournie par le circuit RTED.

La figure 15 représente un autre mode de réalisation du circuit de démodulation, référencé UHR5. Le circuit UHR5 se distingue du circuit UHR4 en ce que les circuits de détection d'enveloppe UTED, RTED sont supprimés et remplacés chacun par un circuit mélangeur FM2, FM3 connecté à un oscillateur local LO2, LO3 respectif. Le circuit FM2 reçoit les signaux US de l'antenne UA et un signal de porteuse à la fréquence F1 de l'oscillateur LO2. Le circuit FM3 reçoit les signaux RS de l'antenne AC et un signal de porteuse à la fréquence F0 de l'oscillateur LO3 Les signaux de sortie des circuits FM2, FM3 qui correspondent aux signaux d'enveloppe ES des circuits UTED, RTED, sont décodés par le circuit de décodage DCD.

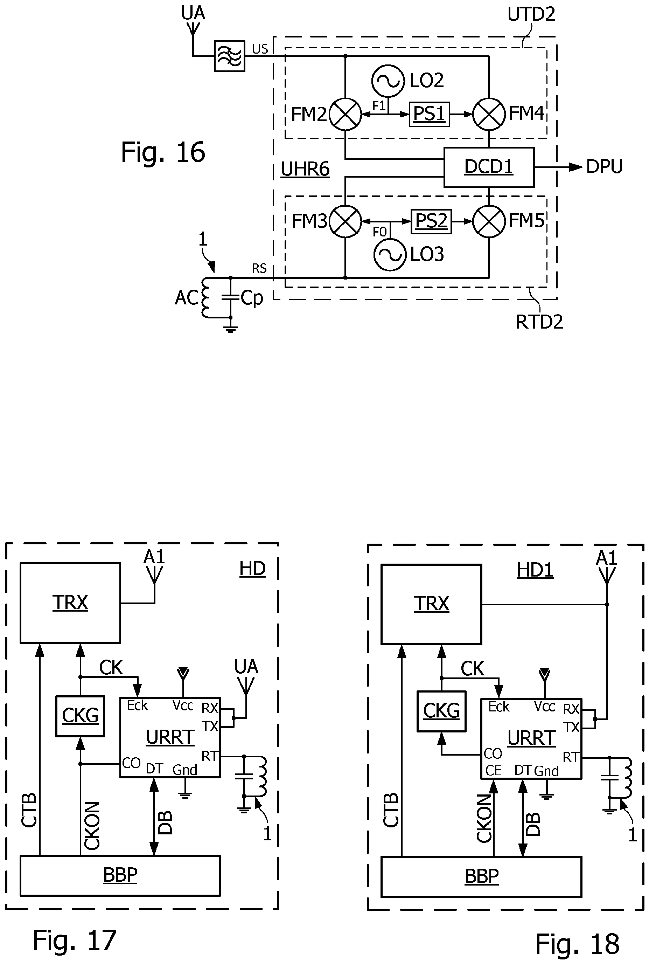

La figure 16 représente un autre mode de réalisation du circuit de démodulation, référencé UHR6. Le circuit UHR6 se distingue du circuit UHR5 en ce qu'il est configuré pour effectuer une démodulation I, Q ou en amplitude et en phase. A cet effet, le circuit UHR6 comprend des circuits mélangeurs FM4, FM5 supplémentaires et des circuits de déphasage de signaux PS1, PS2 introduisant un écart de phase de + ou -90°. La sortie de l'oscillateur LO2 est connectée à l'entrée des circuits FM2 et PS1, et la sortie de l'oscillateur LO3 est connectée à l'entrée des circuits FM3 et PS2. La sortie du circuit PS1 est connectée à l'entrée du circuit FM4, et la sortie du circuit PS2 est connectée à l'entrée du circuit FM5. Les sorties des circuits FM2, FM3, FM4 et FM5 fournissant des signaux en phase et en quadrature de phase, sont connectées à une entrée d'un circuit de décodage DCD1 configuré pour effectuer une démodulation en amplitude et en phase et un décodage de signaux.

La figure 17 représente un téléphone mobile HD équipé du composant URRT. Le composant URRT peut comporter l'un ou l'autre, ou plusieurs des circuits de modulation UHRC, et UHR1 à UHR6 précédemment décrits. Le téléphone HD comprend un processeur de bande de base BBP et des moyens de radiocommunication comprenant un générateur d'horloge CKG et un émetteur-récepteur TRX connecté à une antenne A1. L'émetteur-récepteur TRX est par exemple un émetteur récepteur GSM quadri-bande (850, 900, 1800 ou 1900 MHz). Le générateur d'horloge CKG est par exemple de type VTCXO ("Voltage Controlled Temperature-Compensated Crystal Oscillator" ou oscillateur à quartz à compensation de température et à contrôle en tension) fournissant un signal d'horloge CK de 26 MHz à l'émetteur-récepteur TRX. Le téléphone HD comporte d'autres organes qui ne sont pas représentés dans un souci de simplicité, tels qu'un afficheur, un clavier, une batterie électrique, un microphone, un haut-parleur, etc.

Le processeur BBP est relié à l'émetteur-récepteur TRX par l'intermédiaire d'un bus de contrôle CTB qui véhicule notamment des signaux de contrôle. Le processeur BBP contrôle également le générateur d'horloge CKG au moyen d'un signal de marche/arrêt CKON. Ainsi, le processeur BBP utilise le générateur d'horloge CKG et l'émetteur-récepteur TRX pour établir une connexion avec le réseau GSM.

La borne DT du composant URRT est reliée au processeur BBP par l'intermédiaire d'un bus de données DB. Les bornes TX et RX sont couplées à l'antenne UA, et la borne RT est couplée au circuit d'antenne 1. En mode lecteur, le composant URRT utilise le générateur d'horloge CKG dont la sortie est également connectée à la borne Eck. A cet effet, le composant URRT contrôle également le générateur d'horloge CKG en générant le signal de marche/arrêt CKON que son circuit de traitement DPU émet par une borne CO.

De préférence, la circuiterie connectée aux bornes RX et TX du composant URRT est conçue de manière à présenter une haute impédance lorsque le téléphone a une activité GSM, afin de ne pas perturber le fonctionnement de l'émetteur-récepteur TRX.

Lorsque le téléphone HD est alimenté, le composant URRT peut être alimenté par les bornes Vcc et Gnd, et donc peut fonctionner dans les modes étiquette et lecteur. Lorsque le téléphone HD n'est pas alimenté, le composant URRT ne peut fonctionner qu'en mode étiquette.

En pratique, la mise en oeuvre d'applications de lecture et/ou écriture d'étiquettes HF ou UHF peut être faite de deux manières. Selon une première manière, le processeur BBP gère des applications NFC / UHF et exécute donc lui-même les programmes conçus pour mettre en oeuvre ces applications ("programmes application"). Le composant URRT est alors seulement utilisé comme un coupleur NFC / UHF. Le composant URRT assure l'envoi à des étiquettes HF / UHF de commandes fournies par le processeur BBP et la réception de données fournies par les étiquettes, qui sont ensuite fournies au processeur BBP pour traitement.

Selon une seconde manière, le composant URRT prend en charge les applications de lecture d'étiquettes NFC / UHF. L'unité DPU doit dans ce cas présenter une puissance de calcul et une mémoire-programme suffisantes pour accueillir et exécuter des programmes application.

En mode étiquette (ou émulation d'étiquette), le composant URRT peut également simplement assurer la réception de commandes fournies par un lecteur HF / UHF qui sont ensuite fournies au processeur BBP pour traitement, et l'envoi au lecteur NFC / UHF de données fournies par le processeur BBP, ou bien assurer également le traitement des données reçues et générer des données à émettre. Si le composant URRT doit pouvoir fonctionner en mode étiquette (UHF ou HF) sans alimentation, il doit assurer le traitement des données reçues et la génération des données à émettre.

La figure 18 représente un téléphone mobile HD1 équipé du composant URRT. Le téléphone HD1 se distingue du téléphone HD en ce que les bornes RX, TX du composant URRT ne sont pas connectées à une antenne UHF spécifique, mais à l'antenne A1 du téléphone. Les bornes RX, TX peuvent être configurées pour passer de basse impédance à haute impédance lorsqu'une activité GSM est détectée, afin de ne pas désadapter l'antenne A1 et ne pas réduire les performances de l'émetteur-récepteur TRX. En outre, le processeur BBP ne contrôle pas directement le circuit CKG, mais par l'intermédiaire du composant URRT. A cet effet, le circuit DPU du composant URRT reçoit également le signal CKON émis par le processeur BBP, par une borne CE du composant URRT. L'unité DPU gère le générateur d'horloge CKG de manière transparente en ce qui concerne son activation par le processeur BBP. Ainsi, lorsque le signal CKON émis par le processeur BBP présente une valeur correspondant à la mise en marche du générateur d'horloge CKG (valeur active), indiquant une activité GSM, l'unité DPU active le générateur CKG. Par contre, lorsque le signal CKON présente une valeur correspondant à la mise à l'arrêt du générateur d'horloge CKG (valeur inactive), l'unité DPU peut à tout instant décider de mettre en marche le générateur d'horloge CKG pour conduire une transaction en mode lecteur avec une étiquette NFC / UHF. Si le processeur BBP place le signal CKON à la valeur active pendant que le composant URRT est en train de conduire ou d'initier une transaction, la priorité est donnée à l'activité GSM et le composant URRT interrompt la transaction UHF tout en laissant le générateur CKG à l'état activé.

Ainsi, le composant URRT utilise l'antenne A1 de radiotéléphonie du téléphone et le générateur d'horloge CKG, tout en évitant les conflits de signaux électriques sur l'antenne A1.

Les moyens de radiotéléphonie du téléphone HD1 ainsi mis ici à la disposition du composant URTT comprennent :
- l'antenne A1 et le générateur d'horloge CKG pour la réception de données envoyées par une étiquette UHF, lues via la borne RX,
- le générateur d'horloge CKG pour l'émission de données vers une étiquette NFC, lues via la borne RT, et
- le processeur BBP, le générateur d'horloge CKG et l'antenne A1 pour émettre des données vers une étiquette UHF.

Il est à noter qu'en modes étiquette et lecteur NFC, le composant URRT peut émettre et recevoir des données indépendamment de l'activité GSM du téléphone HD1. Il en est de même en mode étiquette UHF.

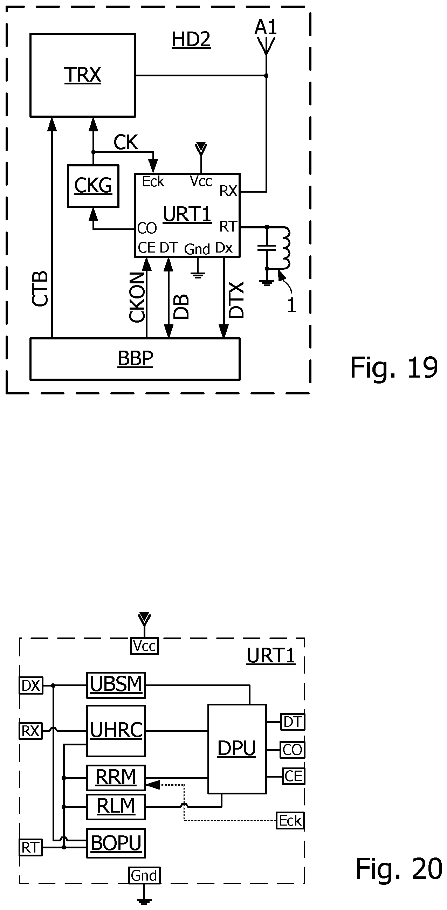

La figure 19 représente un téléphone mobile HD2 équipé d'un composant URT1. La structure du composant URT1 est représentée plus en détail sur la figure 20. Le composant URT1 se distingue du composant URRT en ce que le circuit de modulation URM et la borne de sortie TX sont supprimés. La borne de sortie TX est remplacée par une sortie en bande de base DX, ici un port du de l'unité DPU, qui fournit au processeur BBP un signal porteur de données DTX à émettre en mode lecteur vers une étiquette UHF.

Ainsi, les moyens de radiotéléphonie du téléphone HD2 mis ici à la disposition du composant URT1 comprennent :
- l'antenne A1 et le générateur d'horloge CKG pour la réception de données envoyées par une étiquette UHF, lues via la borne RX,
- le générateur d'horloge CKG pour l'émission de données vers une étiquette NFC, lues via la borne RT,
- le processeur BBP, le générateur d'horloge CKG, l'émetteur-récepteur TRX et l'antenne A1 pour émettre un champ électrique et moduler ce champ électrique en fonction du signal de données DTX, afin d'émettre des données vers une étiquette UHF.

Il est à noter qu'il peut être souhaitable de réaliser un meilleur découplage du signal reçu par rapport au signal envoyé en mode lecteur. Dans ce cas, le circuit URT1 (borne RX) peut être connecté à une antenne distincte de l'antenne de radiotéléphonie A1, par exemple l'antenne UA de la figure 17.

Il apparaîtra clairement à l'homme de l'art que la présente invention est susceptible de divers autres modes de réalisation, notamment ceux résultant de combinaisons des divers modes de réalisation précédemment décrits. En particulier, le composant NFC / UHF peut ne comprendre que des circuits de modulation et de démodulation pour le mode étiquette. Ainsi, les circuits UBSM et RLM représentés sur la figure 7 peuvent être supprimés, et le circuit de démodulation commun UHRC peut être configuré pour ne traiter que des signaux transmis par une étiquette. Egalement, le composant NFC / UHF peut comprendre deux circuits de démodulation, l'un étant adapté au mode étiquette et l'autre au mode lecteur, ces deux circuits de démodulation pouvant être choisis parmi les divers modes de réalisation (UHRC, et UHR1 à UHR6) précédemment décrits.

Par ailleurs, la présente invention n'est pas limitée aux divers modes de réalisation d'un téléphone, précédemment décrits, mais est susceptible d'être appliquée à tout type de dispositif équipé de moyens de transmission radio UHF dans la bande de fréquences utilisée notamment par le protocole ISO18000-6, et en particulier à tout type de dispositif de radiotéléphonie pour le transport de la voix ou le transport de données, par exemple une carte modem 3G destinée à être insérée dans un ordinateur.

## Revendications

1. Circuit intégré sans contact comprenant :
des circuits de modulation et de démodulation (RRM, UHRC) configurés pour se connecter à un circuit d'antenne HF (1) pour émettre et recevoir des signaux HF par couplage inductif dans un mode lecteur,
des circuits de modulation et de démodulation (URM, UHRC) configurés pour se connecter à une antenne UHF (UA, A1) pour émettre et recevoir des signaux UHF par couplage électrique dans un mode lecteur,
un circuit de traitement de donnée (DPU) connecté aux circuits de modulation et de démodulation, et configuré pour fournir des données à émettre aux circuits de modulation, et pour traiter des signaux reçus, transmis par les circuits de démodulation,
**caractérisé en ce que** les circuits de démodulation comprennent un circuit de démodulation commun (UHRC) pour traiter des signaux reçus indifféremment par l'antenne UHF et par le circuit d'antenne HF.

2. Circuit intégré selon la revendication 1, comprenant un circuit de modulation (RLM) configuré pour se connecter à un circuit d'antenne HF (1) pour émettre des signaux HF par couplage inductif dans un mode étiquette, et un circuit de modulation (UBSM) configuré pour se connecter à l'antenne UHF (UA, A1) pour émettre des signaux UHF par couplage électrique dans un mode étiquette, le circuit de démodulation commun (UHRC) étant configuré pour traiter des signaux reçus indifféremment dans les modes lecteur et étiquette.

3. Circuit intégré selon la revendication 1 ou 2, dans lequel le circuit de démodulation commun (UHRC, UHR1, UHR2) comprend un circuit convertisseur de fréquence (FDCV, FDC1, FDC2) pour convertir des signaux UHF reçus par l'antenne UHF (UA) en signaux modulés à une fréquence de porteuse HF (F0), les signaux UHF convertis et les signaux reçus par le circuit d'antenne HF (1) étant démodulés par un même circuit de démodulation (RRD).

4. Circuit intégré selon la revendication 3, dans lequel le circuit convertisseur de fréquence (FDCV) comprend un oscillateur local (LO) configuré pour générer un signal d'oscillateur à une fréquence (F2) présentant un écart avec une fréquence de porteuse UHF (F1) utilisée pour moduler les signaux UHF, égal à la fréquence de porteuse HF (F0), et un circuit mélangeur de fréquence (FM) pour mélanger les signaux UHF reçus (US) avec le signal d'oscillateur.

5. Circuit intégré selon l'une des revendications 1 et 2, dans lequel le circuit de démodulation commun (UHR3) comprend un premier circuit de détection d'enveloppe (UTED, UTD1, UTD2) connecté à l'antenne UHF (UA) et un second circuit de détection d'enveloppe (RTED, RTD1, RTD2) connecté au circuit d'antenne HF (1), les premier et second circuits de détection d'enveloppe étant connectés à un même circuit de décodage de signaux (DCD).

6. Circuit intégré selon la revendication 5, dans lequel les circuits de détection d'enveloppe (UTD2, RTD2) effectuent une détection de phase.

7. Circuit intégré selon l'une des revendications 1 et 2 dans lequel le circuit de démodulation commun (UHR1, UHR2) comprend un premier circuit de détection d'enveloppe (UTED) connecté à l'antenne UHF (UA) et fournissant un signal d'enveloppe (ES) à partir d'un signal UHF reçu (US), et un circuit de modulation (FM1) pour moduler un signal de porteuse HF à une fréquence HF (F0) avec le signal d'enveloppe, le signal d'enveloppe modulé étant fourni à un circuit de démodulation de signaux HF (RRD).

8. Circuit intégré selon la revendication 7, dans lequel la porteuse HF (F0) est générée par un circuit de modulation HF (RRM) prévu pour moduler un signal de donnée à émettre par le circuit d'antenne HF (1).

9. Circuit intégré selon l'une des revendications 1 à 8, comprenant un circuit d'alimentation (BOPU) configuré pour redresser chacun des signaux HF et UHF reçus et générer à partir des signaux redressés une tension d'alimentation du circuit intégré en l'absence d'alimentation électrique externe.

10. Circuit intégré selon l'une des revendications 1 à 9, configuré pour émettre et recevoir des signaux, en modes étiquette et lecteur, conformes à au moins l'une des normes ISO14443 type A ou B, ISO15693, et ISO180006 type A, B ou C.

11. Circuit intégré selon l'une des revendications 1 à 10, comprenant au moins l'une des bornes suivantes :
une borne d'entrée (CE) d'un signal d'inhibition (CKON) indiquant s'il peut ou non engager une communication en mode lecteur UHF,
une borne d'entrée (Eck) d'un signal d'horloge externe (CK) utilisé pour générer des signaux de porteuse HF et UHF, et
une borne de sortie (DX) de signaux de données à émettre en mode lecteur UHF sous la forme d'un signal radio UHF modulé.

12. Dispositif (HD, HD1, HD2) comprenant :
un émetteur-récepteur GSM (TRX) équipé d'une antenne UHF (A1),
un générateur d'horloge (CKG) couplé à l'émetteur-récepteur GSM,
un processeur (BBP) configuré pour se connecter au réseau GSM au moyen de l'émetteur-récepteur GSM,
**caractérisé en ce qu'**il comprend un circuit intégré (URRT, URT1) selon l'une des revendications 1 à 11, le circuit intégré étant connecté à un circuit d'antenne HF (1).

13. Dispositif selon la revendication 12, dans lequel le circuit intégré (URRT, URT1) comprend au moins l'une des bornes suivantes :
une borne (RX) de réception de signaux UHF connectée à l'antenne (A1) de l'émetteur-récepteur GSM (TRX), et une borne d'entrée (CE) d'un signal d'inhibition (CKON) indiquant s'il peut ou non engager une communication en mode lecteur UHF, la borne d'entrée recevant du processeur (BBP) un signal d'activité (CKON) indiquant si l'émetteur-récepteur GSM est en activité pour une connexion au réseau GMS ou non,
une borne de sortie (DX) de signaux de données à émettre en mode lecteur UHF, la borne de sortie de signaux de données étant connectée au processeur (BBP) pour émettre un signal radio UHF modulé par l'émetteur-récepteur GSM (TRX),
une borne (RX) de réception de signaux UHF connectée à l'antenne (A1) de l'émetteur-récepteur GSM (TRX), la borne de réception étant configurée pour passer de basse impédance à haute impédance lorsqu'un signal d'activité (CKON) indique que l'émetteur-récepteur GSM est en activité pour une connexion au réseau GSM,
une borne d'entrée (Eck) d'un signal d'horloge externe (CK) utilisé pour générer des signaux de porteuse HF et UHF, la borne d'entrée de signal d'horloge étant connectée au générateur d'horloge (CKG), et
une borne (RX) de réception de signaux UHF connectée à une antenne UHF distincte de l'antenne UHF (A1) de l'émetteur-récepteur GSM (TRX).

## Patentansprüche

1. Kontaktloser integrierter Schaltkreis, welcher umfasst:
Modulations- und Demodulationsschaltungen (RRM, UHRC), die dafür ausgebildet sind, sich in einem Leser-Modus durch induktive Kopplung mit einer HF-Antennenschaltung (1) zu verbinden, um HF-Signale zu senden und zu empfangen,
Modulations- und Demodulationsschaltungen (URM, UHRC), die dafür ausgebildet sind, sich in einem Leser-Modus durch elektrische Kopplung mit einer UHF-Antenne (UA, A1) zu verbinden, um UHF-Signale zu senden und zu empfangen,
eine Datenverarbeitungsschaltung (DPU), die mit den Modulations- und Demodulationsschaltungen verbunden ist und dafür ausgebildet ist, zu sendende Daten den Modulationsschaltungen zuzuführen und empfangene Signale, die von den Demodulationsschaltungen übertragen wurden, zu verarbeiten,
**dadurch gekennzeichnet, dass** die Demodulationsschaltungen eine gemeinsame Demodulationsschaltung (UHRC) zum Verarbeiten von Signalen, gleichgültig, ob sie durch die UHF-Antenne oder durch die HF-Antennenschaltung empfangen wurden, umfassen.

2. Integrierter Schaltkreis nach Anspruch 1, welcher eine Modulationsschaltung (RLM), die dafür ausgebildet ist, sich in einem Etikett-Modus durch induktive Kopplung mit einer HF-Antennenschaltung (1) zu verbinden, um HF-Signale zu senden, und eine Modulationsschaltung (UBSM), die dafür ausgebildet ist, sich in einem Etikett-Modus durch elektrische Kopplung mit der UHF-Antenne (UA, A1) zu verbinden, um UHF-Signale zu senden, umfasst, wobei die gemeinsame Demodulationsschaltung (UHRC) dafür ausgebildet ist, Signale, gleichgültig, ob sie im Leser- oder Etikett-Modus empfangen wurden, zu verarbeiten.

3. Integrierter Schaltkreis nach Anspruch 1 oder 2, wobei die gemeinsame Demodulationsschaltung (UHRC, UHR1, UHR2) eine Frequenzumformerschaltung (FDCV, FDC1, FDC2) zum Umformen der durch die UHF-Antenne (UA) empfangenen UHF-Signale in mit einer Trägerfrequenz HF (F0) modulierte Signale umfasst, wobei die umgeformten UHF-Signale und die durch die Antennenschaltung HF (1) empfangenen Signale von ein und derselben Demodulationsschaltung (RRD) demoduliert werden.

4. Integrierter Schaltkreis nach Anspruch 3, wobei die Frequenzumformerschaltung (FDCV) einen lokalen Oszillator (LO), der dafür ausgebildet ist, ein Oszillatorsignal mit einer Frequenz (F2) zu erzeugen, die einen Abstand von einer zum Modulieren der UHF-Signale verwendeten UHF-Trägerfrequenz (F1) aufweist, der gleich der HF-Trägerfrequenz (F0) ist, und eine Frequenzmischerschaltung (FM) zum Mischen der empfangenen UHF-Signale (US) mit dem Oszillatorsignal umfasst.

5. Integrierter Schaltkreis nach einem der Ansprüche 1 und 2, wobei die gemeinsame Demodulationsschaltung (UHR3) eine erste Hüllkurven-Erkennungsschaltung (UTED, UTD1, UTD2), die mit der UHF-Antenne (UA) verbunden ist, und eine zweite Hüllkurven-Erkennungsschaltung (RTED, RTD1, RTD2), die mit der HF-Antennenschaltung (1) verbunden ist, umfasst, wobei die erste und die zweite Hüllkurven-Erkennungsschaltung mit ein und derselben Signaldecodierungsschaltung (DCD) verbunden sind.

6. Integrierter Schaltkreis nach Anspruch 5, wobei die Hüllkurven-Erkennungsschaltungen (UTD2, RTD2) eine Phasenerkennung durchführen.

7. Integrierter Schaltkreis nach einem der Ansprüche 1 und 2, wobei die gemeinsame Demodulationsschaltung (UHR1, UHR2) eine erste Hüllkurven-Erkennungsschaltung (UTED), die mit der UHF-Antenne (UA) verbunden ist und ausgehend von einem empfangenen UHF-Signal (US) ein Hüllkurvensignal (ES) liefert, und eine Modulationsschaltung (FM1) zum Modulieren eines HF-Trägersignals mit einer Hochfrequenz (F0) mit dem Hüllkurvensignal umfasst, wobei das modulierte Hüllkurvensignal einer Demodulationsschaltung für HF-Signale (RRD) zugeführt wird.

8. Integrierter Schaltkreis nach Anspruch 7, wobei der HF-Träger (F0) von einer HF-Modulationsschaltung (RRM) erzeugt wird, die dafür vorgesehen ist, ein Datensignal zu modulieren, das von der HF-Antennenschaltung (1) gesendet werden soll.

9. Integrierter Schaltkreis nach einem der Ansprüche 1 bis 8, welcher eine Versorgungsschaltung (BOPU) umfasst, die dafür ausgebildet ist, bei Nichtvorhandensein einer externen Stromversorgung jedes der empfangenen HF- und UHF-Signale gleichzurichten und aus den gleichgerichteten Signalen eine Versorgungsspannung des integrierten Schaltkreises zu erzeugen.

10. Integrierter Schaltkreis nach einem der Ansprüche 1 bis 9, welcher dafür ausgebildet ist, im Etikett- und Leser-Modus Signale zu senden und zu empfangen, die mit wenigstens einer der Normen ISO 14443, Typ A oder B, ISO 15693 und ISO 180006, Typ A, B oder C, konform sind.

11. Integrierter Schaltkreis nach einem der Ansprüche 1 bis 10, welcher wenigstens eine der folgenden Anschlussklemmen umfasst:
eine Eingangsklemme (CE) für ein Sperrsignal (CKON), welches anzeigt, ob eine Kommunikation im UHF-Leser-Modus eingeleitet werden kann oder nicht,
eine Eingangsklemme (Eck) für ein externes Taktsignal (CK), das verwendet wird, um HF- und UHF-Trägersignale zu erzeugen, und
eine Ausgangsklemme (DX) für Datensignale, die im UHF-Leser-Modus in der Form eines modulierten UHF-Funksignals gesendet werden sollen.

12. Vorrichtung (HD, HD1, HD2), welche umfasst:
einen GSM-Sendeempfänger (TRX), der mit einer UHF-Antenne (A1) ausgestattet ist,
einen Taktgenerator (CKG), der mit dem GSM-Sendeempfänger gekoppelt ist,
einen Prozessor (BBP), der dafür ausgebildet ist, sich mittels des GSM-Sendeempfängers mit dem GSM-Netz zu verbinden,
**dadurch gekennzeichnet, dass** sie einen integrierten Schaltkreis (URRT, URT1) nach einem der Ansprüche 1 bis 11 umfasst, wobei der integrierte Schaltkreis mit einer HF-Antennenschaltung (1) verbunden ist.

13. Vorrichtung nach Anspruch 12, wobei der integrierte Schaltkreis (URRT, URT1) wenigstens eine der folgenden Anschlussklemmen umfasst:
eine Klemme (RX) für den Empfang von UHF-Signalen, die mit der Antenne (A1) des GSM-Sendeempfängers (TRX) verbunden ist, und eine Eingangsklemme (CE) für ein Sperrsignal (CKON), welches anzeigt, ob eine Kommunikation im UHF-Leser-Modus eingeleitet werden kann oder nicht, wobei die Eingangsklemme von dem Prozessor (BBP) ein Aktivitätssignal (CKON) empfängt, welches anzeigt, ob der GSM-Sendeempfänger eine Aktivität für eine Verbindung mit dem GSM-Netz aufweist oder nicht,
eine Ausgangsklemme (DX) für Datensignale, die im UHF-Leser-Modus gesendet werden sollen, wobei die Ausgangsklemme für Datensignale mit dem Prozessor (BBP) verbunden ist, um durch den GSM-Sendeempfänger (TRX) ein moduliertes UHF-Funksignal zu senden,
eine Klemme (RX) für den Empfang von UHF-Signalen, die mit der Antenne (A1) des GSM-Sendeempfängers (TRX) verbunden ist, wobei die Empfangsklemme dafür ausgebildet ist, von niedriger Impedanz zu hoher Impedanz überzugehen, wenn ein Aktivitätssignal (CKON) anzeigt, dass der GSM-Sendeempfänger eine Aktivität für eine Verbindung mit dem GSM-Netz aufweist,
eine Eingangsklemme (Eck) für ein externes Taktsignal (CK), das verwendet wird, um HF- und UHF-Trägersignale zu erzeugen, wobei die Eingangsklemme für das Taktsignal mit dem Taktgenerator (CKG) verbunden ist, und
eine Klemme (RX) für den Empfang von UHF-Signalen, die mit einer UHF-Antenne verbunden ist, welche von der UHF-Antenne (A1) des GSM-Sendeempfängers (TRX) verschieden ist.

## Claims

1. A contactless integrated circuit comprising:
modulation and demodulation circuits (RRM, UHRC) configured to connect to a HF antenna circuit (1) to emit and receive HF signals by inductive coupling in a reader mode,
modulation and demodulation circuits (URM, UHRC) configured to connect to a UHF antenna (UA, A1) to emit and receive UHF signals by electric coupling in a reader mode,
a data processing circuit (DPU) connected to the modulation and demodulation circuits, and configured to provide data to be emitted to the modulation circuits, and to process received signals, transmitted by the demodulation circuits,
**characterized in that** the demodulation circuits comprising a common demodulation circuit (UHRC) to equally process signals received by the UHF antenna and the HF antenna circuit.

2. The integrated circuit of claim 1, comprising a modulation circuit (RLM) configured to connect to a HF antenna circuit (1) to emit HF signals by inductive coupling in a tag mode, and a modulation circuit (UBSM) configured to connect to the UHF antenna (UA, A1) to emit UHF signals by electric coupling in a tag mode, the common demodulation circuit (UHRC) being configured to equally process signals received in the reader and tag modes.

3. The integrated circuit of claim 1 or 2, wherein the common demodulation circuit (UHRC, UHR1, UHR2) comprises a frequency converter circuit (FDCV, FDC1, FDC2) to convert UHF signals received by the UHF antenna (UA) into signals modulated at a HF carrier frequency (F0), the UHF signals converted and the signals received by the HF antenna circuit (1) being demodulated by a same demodulation circuit (RRD).

4. The integrated circuit of claim 3, wherein the frequency converter circuit (FDCV) comprises a local oscillator (LO) configured to generate an oscillator signal at a frequency (F2) having a difference with a UHF carrier frequency (F1) used to modulate the UHF signals, equal to the HF carrier frequency (F0), and a frequency mixer circuit (FM) to mix the UHF signals received (US) with the oscillator signal.

5. The integrated circuit of one of claims 1 to 2, wherein the common demodulation circuit (UHR3) comprises a first envelope detection circuit (UTED, UTD1, UTD2) connected to the UHF antenna (UA) and a second envelope detection circuit (RTED, RTD1, RTD2) connected to the HF antenna circuit (1), the first and second envelope detection circuits being connected to a same signal decoding circuit (DCD).

6. The integrated circuit of claim 5, wherein the envelope detection circuits (UTD2, RTD2) perform phase detection.

7. The integrated circuit of one of claims 1 and 2, wherein the common demodulation circuit (UHR1, UHR2) comprises a first envelope detection circuit (UTED) connected to the UHF antenna (UA) and supplying an envelope signal (ES) from a received UHF signal (US), and a modulation circuit (FM1) to modulate a HF carrier signal at a HF frequency (F0) with the envelope signal, the modulated envelope signal being provided to a HF signal demodulation circuit (RRD).

8. The integrated circuit of claim 7, wherein the HF carrier (F0) is generated by a HF modulation circuit (RRM) provided to modulate a data signal to be emitted by the HF antenna circuit (1).

9. The integrated circuit of one of claims 1 to 8, comprising a power supply circuit (BOPU) configured to rectify each HF and UHF received signal and generate from the rectified signals a power supply voltage of the integrated circuit in the absence of external electric power supply.

10. The integrated circuit of one of claims 1 to 9, configured to emit and receive signals, in tag and reader modes, complying with at least one of the standards ISO14443 type A or B, ISO15693, and ISO180006 type A, B or C.

11. The integrated circuit of one of claims 1 to 10, comprising at least one of the following terminals:
an input terminal (CE) of an inhibit signal (CKON) indicating if it may start a communication in UHF reader mode or not.
an input terminal (Eck) of an external clock signal (CK) used to generate HF and UHF carrier signals, and
an output terminal (DX) of data signals to be emitted in UHF reader mode in the form of a modulated UHF radio signal.

12. A device (HD, HD1, HD2) comprising:
a GSM transceiver (TRX) provided with a UHF antenna (A1),
a clock generator (CKG) coupled to the GSM transceiver,
a processor (BBP) configured to connect to the GSM network by means of the GSM transceiver,
**characterized in that** it comprises an integrated circuit (URRT, URT1) according to one of claims 1 to 11, the integrated circuit being connected to a HF antenna circuit (1).

13. The device of claim 12, wherein the integrated circuit (URRT, URT1) comprises at least one of the following terminals:
a terminal (RX) for receiving UHF signals connected to the antenna (A1) of the GSM transceiver (TRX), and an input terminal (CE) of an inhibit signal (CKON) indicating if it may start a communication in UHF reader mode or not, the input terminal receiving from the processor (BBP) an activity signal (CKON) indicating if the GSM transceiver is in activity for a connection to the GMS network or not,
an output terminal (DX) of data signals to be emitted in UHF reader mode, the output terminal of data signals being connected to the processor (BBP) to emit a UHF radio signal modulated by the GSM transceiver (TRX),
a terminal (RX) for receiving UHF signals connected to the antenna (A1) of the GSM transceiver (TRX), the reception terminal being configured to pass from low impedance to high impedance when an activity signal (CKON) indicates that the GSM transceiver is in activity for a connection to the GMS network,
an input terminal (Eck) of an external clock signal (CK) used to generate HF and UHF carrier signals, the clock signal input terminal being connected to the clock generator (CKG), and
a terminal (RX) for receiving UHF signals connected to a UHF antenna different from the UHF antenna (A1) of the GSM transceiver (TRX).
